# EUROPÄISCHE PATENTSCHRIFT

(11) **EP 2 503 518 B1**
(45) Veröffentlichungstag und Bekanntmachung des Hinweises auf die Patenterteilung: **19.06.2013**
(21) Anmeldenummer: 11450041.6
(22) Anmeldetag: 22.03.2011
(51) Int. Cl.: G07D 7/00, H04L 9/32, G07B 15/06, G06F 21/00

(54) **Verfahren zum Validieren einer Mauttransaktion**
Method for validating a toll transaction
Procédé de validation d'une transaction de péage

(43) Veröffentlichungstag der Anmeldung: 26.09.2012
(73) Patentinhaber: Kapsch TrafficCom AG, 1120 Wien (AT)
(72) Erfinder: Hafenscher, Albert, 1210 Wien (AT)
(74) Vertreter: Weiser, Andreas

(56) Entgegenhaltungen:
- EP-A2- 2 088 568
- EP-A2- 2 088 568
- WO-A1-2006/085453
- DE-A1-102004 001 007
- US-A- 5 499 294
- US-A- 5 898 779
- US-A1- 2009 202 105
- US-B1- 6 889 324
- O. Koval et al.: "On security threats for robust perceptual hashing", Proc. SPIE 7254, Media Forensics and Security, 2009, DOI: 10.1117/12.807487 Retrieved from the Internet: URL:spiedigitallibrary.org/data/Conference s/SPIEP/17747/72540H_1.pdf [retrieved on 2012-09-26]

## Beschreibung

Die vorliegende Erfindung betrifft ein Verfahren zum Validieren einer Straßenverkehrs-Kontrolltransaktion, welche durch Aufnehmen eines Bildes eines Fahrzeugs in einer Kontrollstation eines Straßenverkehrs-Kontrollsystems und OCR-Lesen eines Kennzeichens des Fahrzeugs in der Bildaufnahme erzeugt und an einen Transaktionsempfänger des Straßenverkehrs-Kontrollsystems gesandt wird.

Straßenverkehrs-Kontrollsysteme dieser Art werden auch als "Video-Kontrollsysteme" bezeichnet, weil die Kontrolltransaktionen auf Videoaufzeichnungen des Verkehrs an einer Kontrollstation basieren. Die Systeme können für mannigfaltige Kontrollzwecke eingesetzt werden, z.B. zur Kontrolle des Auftretens eines Fahrzeugs an einem bestimmten Ort zur Vergebührung der Benützung dieses Orts in Form einer Straßenmaut, Gebietsmaut oder Parkgebühr, zu Beweiszwecken bei Geschwindigkeitskontrollen oder anderen Verkehrsvergehen, zur Überwachung der Einhaltung von Gefahrengut-Transportvorschriften, der ordnungsgemäßen Durchführung von Winterdienst- oder Straßenreinigungsfahrten, der Ein- und Ausfahrt von Flottenfahrzeugen auf Betriebsgeländen oder Mietfahrzeugen an Verleihstellen, od. dgl.

Die Fahrzeuge werden dabei aufgrund einer optischen Zeichenerkennung (Optical Character Recognition, OCR) ihrer Fahrzeugkennzeichen in den Bildaufnahmen identifiziert. In der Praxis ist der Betreiber des Straßenverkehrs-Kontrollsystems (bei einem Straßenmautsystem: der "Toll Charger", TC) nicht gleich dem Empfänger und Verarbeiter der Kontrolltransaktionen, welcher in der Regel der Inhaber des Straßenverkehrs-Kontrollsystems oder eine staatliche Behörde ("Contract Issuer", CI) ist. Für letztere(n) ist eine Validierung der vom Betreiber übersandten Kontrolltransaktionen auf Echtheit bzw. Authentizität von entscheidender Bedeutung, um zu verhindern, dass nicht stattgefundene Transaktionen den Benutzern bzw. Kontrollpflichtigen verrechnet, angelastet oder zugeschrieben werden.

Aus der EP 2 088 568 ist eine Kontrollstation bekannt, welche im Fall eines Vergehens ein elektronisches Dokument mit anderen Fahrzeugaufnahmen und mit weiteren Daten, wie dem OCR-gelesenen Kennzeichen oder der detektierten Fahrzeugklasse, zusammenstellt. Vor dem Versenden des so erstellten Dokuments an die Zentrale über einen gegebenenfalls unsicheren Kommunikationsweg wird dieses nach einem herkömmlichen private-public-key-Verfahren signiert. Dadurch kann eine Manipulation am Übertragungsweg erkannt werden, eine Validierung bzw. Authentifizierung der gesamten Kontrolltransaktion einschließlich der Dokumenterstellung gelingt so jedoch nicht, weshalb jede der Kontrollstationen mit zusätzlichen Sensorsystemen aufwändig abgesichert werden muss.

Bislang gibt es keine Möglichkeit für eine solche Transaktionsvalidierung bzw. -authentifizierung. Die Erfindung setzt sich zum Ziel, eine derartige Lösung zu schaffen.

Dieses Ziel wird erfindungsgemäß mit einem Verfahren der einleitend genannten Art erreicht, welches sich durch die Merkmale des Anspruchs 1 auszeichnet.

Mit Hilfe des erfindungsgemäßen Verfahrens kann der Transaktionsempfänger (Contract Issuer) direkt an der Schnittstelle zum Kontrollsystembetreiber, z.B. einem Mautsystembetreiber (Toll Charger), Kontrolltransaktionen überprüfen und nicht authentifizierte Kontrolltransaktionen zurückweisen. Die Erfindung beruht dabei auf der Verwendung eines vom Transaktionsempfänger mit seinem Vertrauen ausgestatteten abgesonderten Verarbeitungselements in der Kontrollstation, welches dazu mit einem kryptografischen Schlüssel des Transaktionsempfängers ausgestattet wird. In Verbindung mit einem für jede Transaktion bzw. Bildaufnahme eindeutigen zufälligen Schlüssels der Kontrollstation werden Authentifizierungsdaten für den Transaktionsempfänger erzeugt, welche diesem - durch autarkes Nachrechnen der Authentifizierungsdaten auf seiner Seite - eine Validierung der Ursprungs-Kontrolltransaktion auf Grundlage der ursprünglichen Bildaufnahme ermöglichen.

Die genannte Kontrollstation kann sowohl ortsfest als auch mobil sein, eine oder mehrere Kameras umfassen und auch geografisch verteilte Komponenten haben, beispielsweise einen ausgelagerten Proxyrechner zur OCR-Auswertung des Kennzeichens.

Gemäß einer bevorzugten Ausführungsform der Erfindung werden im Verarbeitungselement mehrere, verschiedenen Transaktionsempfängern zugeordnete kryptografische Schlüssel gespeichert und der jeweils zu verwendende kryptografische Schlüssel wird abhängig vom OCR-gelesenen Kennzeichen ausgewählt. Auf diese Weise können Kontrolltransaktionen für verschiedenste Transaktionsempfänger, z.B. unterschiedliche Behörden, Polizei, Feuerwehr, Straßenerhalter usw., jeweils individuell direkt an ihrem Ursprung authentifiziert und dann validiert werden.

Bevorzugt werden die Authentifizierungsdaten und der zufällige Schlüssel gemeinsam mit der Kontrolltransaktion an den Transaktionsempfänger gesandt, so dass die Kontrolltransaktion die ihre Validierung ermöglichenden Daten unmittelbar mit sich führt. Alternativ können die Authentifizierungsdaten und der zufällige Schlüssel auch gemeinsam mit der Bildaufnahme an den Transaktionsempfänger gesandt werden, wobei entsprechende Verweise auf die Kontrolltransaktion vorgesehen werden.

Wie in Anspruch 1 definiert, legt gemäß der Erfindung der zufällige Schlüssel einen Bildausschnitt in der Bildaufnahme fest und das genannte Verschlüsseln der Bildaufnahme mit dem zufälligen Schlüssel umfasst den Schritt des Entnehmens des Bildausschnitts aus der Bildaufnahme und den Schritt des Bildens eines ersten Hashwerts des Bildausschnitts. Dadurch kann mit einer äußerst geringen Rechenleistung in dem Verarbeitungselement das Auslangen gefunden werden, weil das darin stattfindende Verschlüsseln, soweit es den zufälligen Schlüssel betrifft, sich auf das Extrahieren eines zufälligen Bildausschnitts aus der Bildaufnahme und das Bilden eines Hashwerts desselben beschränkt. Das Herausgreifen eines Bildausschnitts reduziert den Datenumfang beträchtlich, und das Bilden eines Hashwerts ist ein sehr einfacher rechentechnischer Vorgang. Für das weitere Verschlüsseln mit dem kryptografischen Schlüssel liegt damit der genannte Hashwert als bereits stark reduzierter Eingangsdatensatz vor und es kann daran jedes in der Technik bekannte Verschlüsselungsverfahren mit geringem Aufwand angewandt werden.

Bevorzugt enthält der entnommene Bildausschnitt auch das Fahrzeugkennzeichen des Fahrzeugs, was die Validierungssicherheit erhöht.

Besonders günstig ist es, wenn auch dieses zweite Verschlüsseln mit Hilfe einer Hashwertbildung erfolgt, d.h. das genannte Verschlüsseln der Bildaufnahme mit dem kryptografischen Schlüssel umfasst den Schritt des Bildens eines zweiten Hashwerts aus dem ersten Hashwert und dem kryptografischen Schlüssel, welcher zweite Hashwert dann die Authentifizierungsdaten bildet.

Der genannte Bildausschnitt kann jeder Teil der Bildaufnahme sein, der durch den zufälligen Schlüssel festlegbar ist. Beispielsweise gibt der zufällige Schlüssel die Eckpunkte einer Umfangskontur an, die einen flächigen Bildausschnitt umgrenzt. Alternativ könnte der zufällige Schlüssel Farbwerte für Bildpunkte vorgeben, und alle Bildpunkten mit diesen Farbwerten bilden gemeinsam den genannten Bildausschnitt.

Unter dem "Bilden eines Hashwerts" wird in der vorliegenden Beschreibung die Anwendung einer praktisch unumkehrbaren n:1-Abbildungsfunktion auf den Eingangswert verstanden, d.h. einer Funktion, die nur (extrem) vieldeutig umkehrbar ist, so dass aus der Kenntnis des Hashwerts praktisch nicht mehr auf den Ausgangswert (hier: den Bildausschnitt) geschlossen werden kann. Beispiele solcher Hashfunktionen sind die Quersummenfunktion, die Modulofunktion usw.

In weiteren vorteilhaften Ausgestaltungen der Erfindung können in die Authentifizierungsdaten ein Zeitstempel, eine Kennung der Kontrollstation, eine Kennung des Verarbeitungselements und/oder ein fortlaufender Zählwert integriert werden. Jede dieser Angaben kann für spätere Plausibilitätsprüfungen herangezogen werden und damit die Sicherheit der Validierung erhöhen.

Weiters ist es möglich, im Transaktionsempfänger und im Verarbeitungselement mehrere kryptografische Schlüssel mit zugeordneten Schlüsselkennungen zu speichern, die Schlüsselkennung des verwendeten Schlüssels in die Authentifizierungsdaten zu integrieren und im Transaktionsempfänger zur Ermittlung des zugeordneten Schlüssels zu verwenden. Auch dadurch kann die Sicherheit des Systems verstärkt werden.

Das als Authentifizierungseinheit dienende Verarbeitungselement kann sowohl ein Software- als auch ein Hardwareelement sein. Bevorzugt wird ein Hardwareelement verwendet, welches über eine physische Schnittstelle an die Kontrollstation angeschlossen wird, z.B. in der Art eines kryptografisch abgesicherten Hardwaremoduls (Secure Access Module, SAM), eines USB-Tokens usw. Dabei kann bevorzugt auch vorgesehen werden, dass das Trennen der Schnittstelle das Hardwareelement unbrauchbar macht, um Manipulationen hintanzuhalten und hohen Vertrauensschutz für den Transaktionsempfänger bereitzustellen.

Gemäß einem weiteren bevorzugten Merkmal der Erfindung erfolgt das Senden der ergänzten Kontrolltransaktion von der Kontrollstation an den Transaktionsempfänger über einen ersten Kanal und das Senden der Bildaufnahme von der Kontrollstation an den Transaktionsempfänger über einen zweiten Kanal, wobei die ergänzte Kontrolltransaktion und die zugehörige Bildaufnahme im Transaktionsempfänger anhand zumindest eines wechselseitigen Verweises darin einander zugeordnet werden. Es ist dadurch nicht zwingend notwendig, dass die Kontrolltransaktionen und die Bildaufnahmen zeitgleich beim Transaktionsempfänger einlangen; beispielsweise könnten die Bildaufnahmen in Datenbanken akkumuliert dem Transaktionsempfänger für die Validierung bereitgestellt werden.

Die Erfindung wird nachstehend anhand eines in den beigeschlossenen Zeichnungen dargestellten Ausführungsbeispiels näher erläutert. In den Zeichnungen zeigt
Fig. 1 ein Blockschaltbild eines interoperablen Straßenmautsystems als beispielhaftes Straßenverkehrs-Kontrollsystems der Erfindung;
Fig. 2 eine der Kontrollstationen des Straßenmautsystems von Fig. 1 schematisch; und
Fig. 3 ein Signalflußdiagramm des erfindungsgemäßen Verfahrens zur Validierung von Kontrolltransaktionen im Rahmen des Straßenmautsystems von Fig. 1.

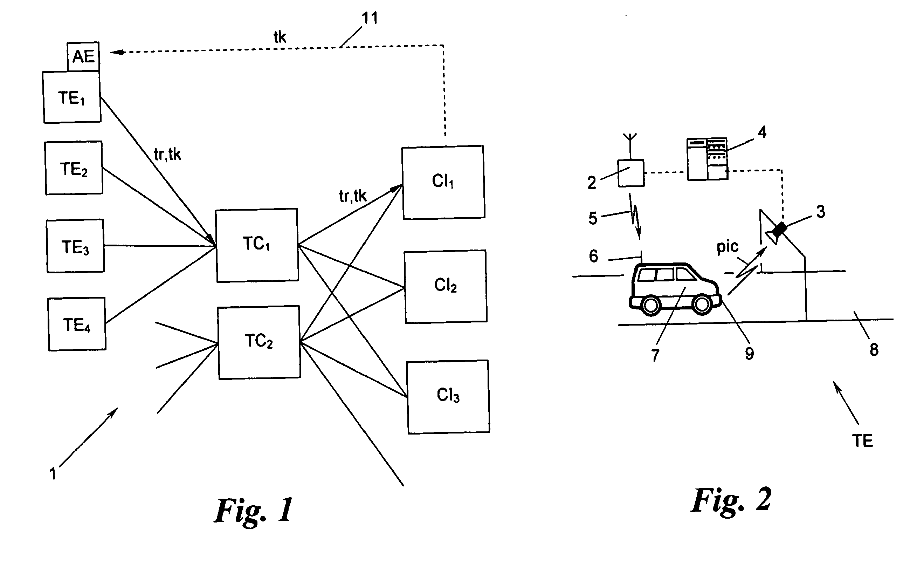

Gemäß Fig. 1 werden in einem interoperablen Straßenverkehrs-Kontrollsystem, hier einem Straßenmautsystems 1, Kontrolltransaktionen tr von einer Vielzahl unterschiedlichster Kontrollstationen (hier: Tolling Entities) TE erzeugt und über betreiberspezifische Zentralen (hier: Toll Charger) TC an Transaktionsempfänger CI (Contract Issuer) zur Verarbeitung und/oder Abrechnung gesandt. Transaktionsempfänger CI können Kontrolltransaktionen tr von verschiedensten Betreiberzentralen TC erhalten und diese können wiederum an eine Vielzahl unterschiedlichster Kontrollstationen TE angebunden sein, von denen eine in Fig. 2 beispielhaft gezeigt ist.

Die Kontrollstation TE von Fig. 2 umfasst eine optionale Funkbake 2, z.B. nach dem DSRC- (Dedicated Short Range Communication) oder WAVE- (Wireless Access in a Vehicle Environment) Standard, und eine Foto- oder Videokamera 3, welche an einen Stationsrechner 4 angebunden sind, der wiederum mit der Zentrale TC (Fig. 1) in Verbindung steht. Über die Funkbake 2 können z.B. DSRC-basierte Mauttransaktionen durch Funkkommunikation 5 mit Fahrzeuggeräten (Onboard Units, OBUs) 6 erzeugt werden, die von Fahrzeugen 7 mitgeführt werden, welche die Station TE auf einer Straße 8 basieren.

Mit Hilfe der Kamera 3 können videobasierte Kontrolltransaktionen erzeugt werden, indem die Kamera 3 eine Bildaufnahme pic des Fahrzeugs 7 erstellt, in welcher anschließend mittels optischer Zeichenerkennung (Optical Character Recognition, OCR) das Fahrzeugkennzeichen 9 auf einer Kennzeichentafel des Fahrzeugs 7 gelesen wird. Das Fahrzeugkennzeichen 9 als Ergebnis der OCR-Auswertung der Bildaufnahme pic stellt - beispielsweise ergänzt um einen aktuellen Zeitstempel, einen Geschwindigkeitsmeßwert des Fahrzeugs und/oder einer Kennung der Kontrollstation TE oder Kamera 3 - die Grundlage einer videobasierten Kontrolltransaktion tr dar, welche über eine Zentrale TC an den Transaktionsempfänger CI gesandt wird.

Bei dem OCR-gelesenen Fahrzeugkennzeichen 9 kann es sich um das Zulassungskennzeichen des Fahrzeugs handeln, aber auch um sonstige OCR-lesbare Kennzeichen des Fahrzeugs, z.B. eine Gefahrengutkennzeichnung, eine Flottenkennzeichnung usw.

Um dem Transaktionsempfängern CI eine Validierung (Authentifizierung) solch videobasierter Transaktionen tr zu ermöglichen, sind videobasierte Kontrollstationen TE mit einem abgesonderten Verarbeitungselement (Authentication Entity) AE ausgestattet, welches der gesamten Kontrollstation TE oder einer oder jeder Kamera 3 derselben einzeln zugeordnet werden kann.

In einem ersten Schritt 11 wird ein einem Transaktionsempfänger CI eindeutig zugeordneter und für diesen vertrauenswürdiger kryptografischer Schlüssel (Trusted Key) tk einerseits im Transaktionsempfänger CI und anderseits in jeder Kontrollstation tr, von der Kontrolltransaktion TR erhalten werden sollen, genauer im jeweiligen Verarbeitungselement AE der Kontrollstation TE, gespeichert (Fig. 1).

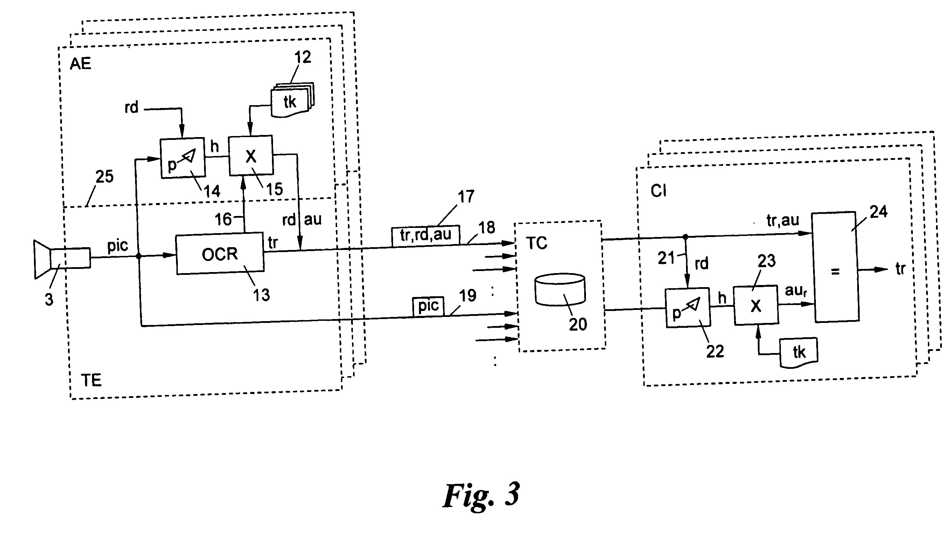

Fig. 3 zeigt anschließend die Verarbeitungsschritte bzw. Signalflüsse bei der Passage eines Fahrzeugs 7 an einer Kontrollstation TE, die mit einem solchen Verarbeitungselement AE ausgestattet ist und eine Kontrolltransaktion tr erzeugt, welche über die Betreiberzentrale TC an einen beispielhaften Transaktionsempfänger CI gesandt wird. Die kryptografischen Schlüssel tk der verschiedenen Transaktionsempfänger CI, an welche die Kontrollstation TE Kontrolltransaktionen tr senden kann, wurden bereits im Verarbeitungselement AE hinterlegt, siehe tk-Datensatz 12.

Mit der Kamera 3 wird eine Bildaufnahme pic des Fahrzeugs 7 bei der Passage der Kontrollstation TE erstellt und daraus in einem OCR-Prozess 13 eine Kontrolltransaktion tr auf Basis des OCR-Kennzeichenleseergebnisses des Fahrzeugkennzeichens 9 erzeugt. Die Kontrolltransaktion tr kann weitere Daten wie einen Zeitstempel, eine Kennung der Kontrollstation TE und/oder Kamera 3, eine Kennung des Verarbeitungselements AE, einen fortlaufend inkrementierten Zählwert (Transaktionszähler) usw. enthalten. Es versteht sich, dass der OCR-Prozess 13 auch in einem geografisch entfernten, der Kontrollstation TE zuzurechnenden Proxyrechner (nicht gezeigt) berechnet werden könnte.

Das Verarbeitungselement AE erhält die Bildaufnahme pic und erzeugt für diese einen zufälligen Schlüssel rd. In einem Prozeß 14 wird auf Grundlage des zufälligen Schlüssels rd ein zufälliger Bildausschnitt p aus der Bildaufnahme pic entnommen und ein Hashwert h(p) des Bildausschnitts p erzeugt, z.B. durch Modulo-Aufsummieren der Bildpunkte im Bildausschnitt p. Der zufällige Schlüssel rd gibt dazu beispielsweise direkt die Bildkoordinaten von zumindest drei Bildpunkten in der Bildaufnahme pic an, welche den Bildausschnitt p aufspannen bzw. festlegen. Alternativ könnte der zufällige Schlüssel rd bestimmte Eigenschaften, z.B. Farbwerte, von Bildpunkten vorgeben, und alle Bildpunkte mit diesen Eigenschaften bilden den Bildausschnitt p.

Das Entnehmen eines zufälligen Bildausschnittes p aus der Bildaufnahme pic und Bilden eines Hashwerts h des Bildausschnitts p benötigt nur geringe Rechenleistung und kann daher in Echtzeit z.B. auch mit einfachen Prozessormitteln im Verarbeitungsdokument AE, wie sie beispielsweise auf Chipkarten oder SIM-Kartenprozessoren vorliegen, realisiert werden.

Anschließend wird in einem Prozeß 15 der so gebildete Hashwert h nochmals mit dem kryptografischen Schlüssel tk des jeweiligen Transaktionsempfängers TE verschlüsselt, an den die Kontrolltransaktion tr gerichtet ist. Der Verschlüsselungsprozeß 15 kann auch durch eine nochmalige Hashwertbildung aus dem vorgenannten Hashwert h und dem kryptografischen Schlüssel tk realisiert sein.

Die Auswahl des richtigen Schlüssels tk kann beispielsweise aufgrund von in der Kontrollstation TE gespeicherten Zuordnungslisten ("white lists") von Fahrzeugkennzeichen 9 und zuständigen Transaktionsempfängern CI ermittelt werden, d.h. das Kennzeichenleseergebnis des OCR-Prozesses 13 steuert die Auswahl des kryptografischen Schlüssels tk aus dem Satz 12 (Pfeil 16).

Am Ausgang bzw. Ende des Prozesses 15 ergeben sich Authentifizierungsdaten au, welche gemeinsam mit dem zufälligen Schlüssel rd der Kontrolltransaktion tr hinzugefügt werden, um diese zu einer ergänzten Kontrolltransaktion {tr,rd,au} 17 auszubauen. Dabei können den Authentifizierungsdaten au auch noch weitere Daten wie ein Zeitstempel, eine Kennung der Kontrollstation TE und/oder Kamera 3, eine Kennung des Verarbeitungselements AE, ein fortlaufend inkrementierter Zählwert (Transaktionszähler) usw. hinzugefügt oder in diese integriert worden sein.

Die ergänzte Kontrolltransaktion 17 wird anschließend über einen ersten Übertragungskanal 18, welcher z.B. auch eine Betreiberzentrale TC auf seinem Weg umfasst, zum Transaktionsempfänger CI gesandt. Auf einem zweiten Übertragungskanal 19 wird auch die der Kontrolltransaktion tr zugrundeliegende Bildaufnahme pic an den Transaktionsempfänger CI gesandt. Die Versendung über den ersten und den zweiten Übertragungskanal 18, 19 braucht nicht zeitgleich erfolgen; so könnten sowohl die ergänzten Kontrolltransaktionen 17 als auch - bevorzugt - die Bildaufnahmen pic z.B. in Datenbanken 20 der Betreiberzentrale TC zwischengespeichert und zum Abruf durch den Transaktionsempfänger CI bereitgestellt werden, was hier ebenfalls unter den Begriff des "Sendens" fällt. Eine weitere Möglichkeit ist, dass die Authentifizierungsdaten au und der zufällige Schlüssel rd nicht der Kontrolltransaktion tr, sondern den Bilddaten pic hinzugefügt werden. Auch können alle Daten tr, rd, au, pic über ein und denselben Übertragungskanal gesandt werden.

Es versteht sich, dass anstelle der gezeigten bevorzugten Prozesse 14, 15 in vereinfachten Ausführungsformen auch nur ein einziger Verschlüsselungsprozeß bzw. Verschlüsselungsschritt im Verarbeitungselement AE stattfinden kann, in welchem die Bildaufnahme pic in einem Schritt mit dem zufälligen Schlüssel rd und dem kryptografischen Schlüssel tk zu den Authentifizierungsdaten au verschlüsselt wird. Beispielsweise könnten der Zufallsschlüssel rd und der kryptografische Schlüssel tk zu einem gemeinsamen Schlüssel kombiniert werden, der auf die Bildaufnahme pic angewandt wird, um daraus die Authentifizierungsdaten au zu erhalten.

Im Transaktionsempfänger CI werden anschließend die empfangenen ergänzten Kontrolltransaktionen 17 und die diesen zugrundeliegenden empfangenen Bildaufnahmen pic zusammengeführt, d.h. einander zugeordnet, beispielsweise anhand zumindest eines wechselseitigen Verweises in einer dieser Daten, beispielsweise eines Verweises in der Kontrolltransaktion tr auf eine eindeutige Kennung einer Bildaufnahme pic oder eines Verweises in einer Bildaufnahme pic auf eine eindeutige Kennung einer Kontrolltransaktion tr, oder beides. Auch könnte der Transaktionsempfänger CI nur stichprobenartig Kontrolltransaktionen tr validieren, indem er nur im Anlaßfall die entsprechende zugeordnete Bildaufnahme pic verarbeitet oder empfängt, z.B. aus der Datenbank 20 der Betreiberzentrale TC anfordert. Wenn die Bildaufnahme pic gemeinsam mit der ergänzten Kontrolltransaktion 17 empfangen wird, erübrigt sich eine Zuordnung.

In einem ersten Schritt 21 wird im Transaktionsempfänger CI nun der zufällige Schlüssel rd aus der ergänzten Kontrolltransaktion 17 entnommen und in einem Prozeß 22, welcher dem Prozeß 14 im Verarbeitungselement AE gleicht, auf die empfangene zugeordenete Bildaufnahme pic angewandt, um wieder den zufälligen Bildausschnitt p zu erhalten und für diesen den Hashwert h zu bilden. Letzterer wird in einem Prozeß 23, welcher dem Prozeß 15 des Verarbeitungselements AE gleicht, wieder mit dem kyptografischen Schlüssel tk des Transaktionsempfängers CI verschlüsselt, um Referenz- bzw. Soll-Authentifizierungsdaten auᵣ zu erhalten. Diese werden anschließend in einem Schritt bzw. Prozeß 24 mit den aus der ergänzten Kontrolltransaktion 17 entnommenen Authentifizierungsdaten au verglichen und, wenn sie gleich sind, wird die Transaktion tr validiert, d.h. als authentifiziert angesehen und für die weitere Verarbeitung und/oder Abrechnung im Transaktionsempfänger CI freigegeben. Im Ungleichheitsfall liegt ein Fehler oder eine Manipulation vor, und die Transaktion tr ist nicht validiert (ungültig) und wird verworfen; eine entsprechende Alarmmeldung kann ausgegeben und protokolliert werden.

Optional können für jeden Transaktionsempfänger CI mehrere verschiedene kryptografische Schlüssel tkᵢ - jeweils mit einer zugeordneten Schlüsselkennung tkID - im Datensatz 12 des Verarbeitungselements AE und im Transaktionsempfänger CI hinterlegt werden (nicht dargestellt). Im Verarbeitungselement AE wird dann einer Schlüssel tkᵢ des jeweiligen Transaktionsempfängers CI mitsamt seiner Schlüsselkennung tkID ausgewählt und für die Verschlüsselung verwendet. Die Schlüsselkennung tkID des verwendeten Schlüssels tkᵢ wird dann den Authentifizierungsdaten au hinzugefügt und im Transaktionsempfänger CI zur Identifizierung des richtigen Schlüssels tkᵢ herangezogen.

Das Verarbeitungselement AE kann sowohl als kryptografisch abgesichertes Softwaremodul als auch - bevorzugt - als physisch abgesichertes Hardwareelement ausgeführt werden. Insbesondere kann das Verarbeitungselement AE über eine physische Schnittstelle 25 an die Kontrollstation TE - welche im einfachsten Fall auch nur die Kamera 3 sein kann - angeschlossen werden. Es wird Vorsorge getroffen, dass ein nicht authorisiertes Auftrennen der Schnittstelle 25 das als Hardwareelement ausgeführte Verarbeitungselement AE unbrauchbar macht, z.B. indem ein Auftrennen der Schnittstelle 25 den Speicher des Verarbeitungselements AE unwiederbringlich löscht oder zumindest jeden Zugriff auf die kryptografischen Schlüssel rd, tk darin dauerhaft blockiert.

Die Erfindung ist nicht auf die dargestellten Ausführungsformen beschränkt, sondern umfasst alle Varianten und Modifikationen, die in den Rahmen der angeschlossenen Ansprüche fallen.

## Patentansprüche

1. Verfahren zum Validieren einer Straßenverkehrs-Kontrolltransaktion (tr), welche von einer Kontrollstation (TE) eines Straßenverkehrs-Kontrollsystems (1) an einen Transaktionsempfänger (CI) des Straßenverkehrs-Kontrollsystems (1) gesandt wird, im Transaktionsempfänger (CI), mit den Schritten:
Speichern eines dem Transaktionsempfänger (CI) zugeordneten kryptografischen Schlüssels (tk) im Transaktionsempfänger (CI) und in einem abgesonderten Verarbeitungselement (AE) der Kontrollstation (TE);
Aufnehmen einer Bildaufnahme (pic) eines Fahrzeugs (7), OCR-Lesen eines Kennzeichens (9) des Fahrzeugs (7) aus der Bildaufnahme (pic) und Erzeugen einer Kontrolltransaktion (tr) daraus in der Kontrollstation (TE);
Erzeugen eines zufälligen Schlüssels (rd), welcher einen Bildausschnitt (p) in der Bildaufnahme (pic) festlegt, und Verschlüsseln der Bildaufnahme (pic) mit dem zufälligen Schlüssel (rd) und dem kryptografischen Schlüssel (tk) zu Authentifizierungsdaten (au) im abgesonderten Verarbeitungselement (AE) durch die Prozesse
- Entnehmen des Bildausschnitts (p) aus der Bildaufnahme (pic),
- Bilden eines ersten Hashwerts (h) des Bildausschnitts (p) und
- Verschlüsseln des ersten Hashwerts (h) mit dem kryptographischen Schlüssel (tk) zu den Authentifizierungsdaten (au);
Senden der Bildaufnahme (pic), der Kontrolltransaktion (tr), des zufälligen Schlüssels (rd) und der Authentifizierungsdaten (au) an den Transaktionsempfänger (CI);
im Transaktionsempfänger: Verschlüsseln der empfangenen Bildaufnahme (pic) mit dem empfangenen zufälligen Schlüssel (rd) und dem gespeicherten kryptografischen Schlüssel (tk), und zwar durch die gleichen Prozesse wie im Verarbeitungselement (AE), zu Soll-Authentifizierungsdaten (auᵣ) und
Vergleichen der empfangenen Authentifizierungsdaten (au) mit den Soll-Authentifizierungsdaten (auᵣ),
wobei der Gleichheitsfall die empfangene Kontrolltransaktion (tr) validiert.

2. Verfahren nach Anspruch 1, **dadurch gekennzeichnet, dass** das genannte Verschlüsseln des ersten Hashwerts (h) mit dem kryptografischen Schlüssel (tk) den Schritt des Bildens eines zweiten Hashwerts aus dem ersten Hashwert (h) und dem kryptografischen Schlüssel (tk) umfasst, welcher zweite Hashwert die Authentifizierungsdaten (au) bildet.

3. Verfahren nach Anspruch 1 oder 2, **dadurch gekennzeichnet, dass** im Verarbeitungselement mehrere, verschiedenen Transaktionsempfängern (CI) zugeordnete kryptografische Schlüssel (tk) gespeichert werden und der jeweils zu verwendende kryptografische Schlüssel (tk) abhängig vom OCR-gelesenen Kennzeichen (9) ausgewählt wird.

4. Verfahren nach einem der Ansprüche 1 bis 3, **dadurch gekennzeichnet, dass** die Authentifizierungsdaten (au) und der zufällige Schlüssel (rd) gemeinsam mit der Kontrolltransaktion (tr) an den Transaktionsempfänger (CI) gesandt werden.

5. Verfahren nach einem der Ansprüche 1 bis 3, **dadurch gekennzeichnet, dass** die Authentifizierungsdaten (au) und der zufällige Schlüssel (rd) gemeinsam mit der Bildaufnahme (pic) an den Transaktionsempfänger (CI) gesandt werden.

6. Verfahren nach einem der Ansprüche 1 bis 5, **dadurch gekennzeichnet, dass** in die Authentifizierungsdaten (au) ein Zeitstempel, eine Kennung der Kontrollstation (TE), eine Kennung des Verarbeitungselements (AE) und/oder ein fortlaufender Zählwert integriert wird.

7. Verfahren nach einem der Ansprüche 1 bis 6, **dadurch gekennzeichnet, dass** im Transaktionsempfänger (CI) und im Verarbeitungselement (AE) mehrere kryptografische Schlüssel (tkᵢ) mit zugeordneten Schlüsselkennungen (tkID) gespeichert werden, wobei die Schlüsselkennung (tkID) des verwendeten Schlüssels (tkᵢ) in die Authentifizierungsdaten (au) integriert und im Transaktionsempfänger (CI) zur Ermittlung des zugeordneten Schlüssels (tkᵢ) verwendet wird.

8. Verfahren nach einem der Ansprüche 1 bis 7, **dadurch gekennzeichnet, dass** als genanntes Verarbeitungselement (AE) ein Hardwareelement verwendet wird, welches über eine physische Schnittstelle (25) an die Kontrollstation (TE) angeschlossen wird.

9. Verfahren nach Anspruch 8, **dadurch gekennzeichnet, dass** das Trennen der Schnittstelle (25) das Hardwareelement (AE) unbrauchbar macht.

## Claims

1. A method for validating a road traffic control transaction (tr) that is sent from a control station (TE) of a road traffic control system (1) to a transaction receiver (CI) of the road traffic control system (1) in the transaction receiver (CI), comprising the steps:
storing a cryptographic key (tk) assigned to the transaction receiver (CI) in the transaction receiver (CI) and in a separate processing element (AE) of the control station (TE);
recording an image (pic) of a vehicle (7), reading an identification (9) of the vehicle (7) in the recorded image (pic) by means of OCR and generating a control transaction (tr) thereof in the control station (TE);
generating a random key (rd) which defines an image section (p) in the recorded image (pic) and encrypting the recorded image (pic) into authentication data (au) with the random key (rd) and the cryptographic key (tk) in the separate processing element (AE) by the processes
- extracting the image section (p) from the recorded image (pic),
- forming a first hash value (h) of the image section (p) and
- encrypting the first hash value (h) with the cryptographic key (tk) into the authentication data (au);
sending the recorded image (pic), the control transaction (tr), the random key (rd) and the authentication data (au) to the transaction receiver (CI);
in the transaction receiver: encrypting the received recorded image (pic) into nominal authentication data (auᵣ) with the received random key (rd) and the stored cryptographic key (tk), in fact by the same processes as conducted in the processing element (AE), and
comparing the received authentication data (au) with the nominal authentication data (auᵣ),
wherein the received control transaction (tr) is validated if the two datasets are identical.

2. The method according to Claim 1, **characterized by** the fact that the aforementioned encryption of the first hash value (h) with the cryptographic key (tk) comprises the step of forming a second hash value of the first hash value (h) and the cryptographic key (tk), wherein the second hash value represents the authentication data (au).

3. The method according to Claim 1 or 2, **characterized by** the fact that several cryptographic keys (tk) assigned to different transaction receivers (CI) are stored in the processing element and the cryptographic key (tk) to be respectively used is selected depending on the identification (9) read by means of OCR.

4. The method according to one of Claims 1-3, **characterized by** the fact that the authentication data (au) and the random key (rd) are sent to the transaction receiver (CI) together with the control transaction (tr).

5. The method according to one of Claims 1-3, **characterized by** the fact that the authentication data (au) and the random key (rd) are sent to the transaction receiver (CI) together with the recorded image (pic).

6. The method according to one of Claims 1-5, **characterized by** the fact that a time stamp, an identification of the control station (TE), an identification of the processing element (AE) and/or a serial count value is integrated into the authentication data (au).

7. The method according to one of Claims 1-6, **characterized by** the fact that several cryptographic keys (tkᵢ) are stored in the transaction receiver (CI) and in the processing element (AE) together with assigned key identifications (tkID), wherein the key identification (tkID) of the key (tkᵢ) used is integrated into the authentication data (au) and used for determining the assigned key (tkᵢ) in the transaction receiver (CI).

8. The method according to one of Claims 1-7, **characterized by** the fact that a hardware element is used as the aforementioned processing element (AE) and connected to the control station (TE) via a physical interface (25).

9. The method according to Claim 8, **characterized by** the fact that a separation of the interface (25) renders the hardware element (AE) unusable.

## Revendications

1. Procédé de validation d'une transaction (tr) de contrôle de trafic routier transmise, par un poste de contrôle (TE) d'un système (1) de contrôle de trafic routier, à un récepteur (CI) de transactions dudit système (1) de contrôle de trafic routier, s'opérant dans ledit récepteur (CI) de transactions, comprenant les étapes:
mémorisation, dans ledit récepteur (CI) de transactions et dans un élément de traitement distinct (AE) dudit poste de contrôle (TE), d'une clé cryptographique (tk) attribuée audit récepteur (CI) de transactions ;
enregistrement d'un cliché (pic) d'un véhicule (7), lecture OCR d'une caractéristique (9) dudit véhicule (7) à partir dudit cliché (pic) et, sur cette base, génération d'une transaction de contrôle (tr) dans le poste de contrôle (TE) ;
génération d'une clé aléatoire (rd) définissant un fragment d'image (p), dans le cliché (pic), et encryptage dudit cliché (pic) avec ladite clé aléatoire (rd) et ladite clé cryptographique (tk), en vue d'obtenir des données d'authentification (au) dans l'élément de traitement distinct (AE), par les processus
- extraire le fragment d'image (p) du cliché (pic),
- former une première valeur de hachage (h) dudit fragment d'image (p) et
- encryptage de ladite première valeur de hachage (h) avec ladite clé cryptographique (tk), en vue d'obtenir lesdites données d'authentification (au) ;
transmission, audit récepteur (CI) de transactions, dudit cliché (pic), de ladite transaction de contrôle (tr), de ladite clé aléatoire (rd) et desdites données d'authentification (au) ;
dans ledit récepteur de transactions : encryptage du cliché reçu (pic) avec la clé aléatoire reçue (rd) et la clé cryptographique mémorisée (tk), plus précisément par les mêmes processus que ceux exécutés dans l'élément de traitement (AE), en vue d'obtenir des données d'authentification de consigne (auᵣ) et
comparaison des données d'authentification reçues (au) avec lesdites données d'authentification de consigne (auᵣ),
sachant que le cas d'identité valide la transaction de contrôle reçue (tr).

2. Procédé selon la revendication 1, **caractérisé par le fait que** l'encryptage précité de la première valeur de hachage (h), avec la clé cryptographique (tk), inclut l'étape de formation d'une seconde valeur de hachage sur la base de ladite première valeur de hachage (h) et de ladite clé cryptographique (tk), laquelle seconde valeur de hachage forme les données d'authentification (au).

3. Procédé selon la revendication 1 ou 2, **caractérisé par le fait que** plusieurs clés cryptographiques (tk) attribuées à différents récepteurs (CI) de transactions sont mémorisées dans l'élément de traitement, et la clé cryptographique (tk), devant être respectivement utilisée, est sélectionnée en fonction de la caractéristique (9) lue en mode OCR.

4. Procédé selon l'une des revendications 1 à 3, **caractérisé par le fait que** les données d'authentification (au) et la clé aléatoire (rd) sont transmises au récepteur (CI) de transactions conjointement à la transaction de contrôle (tr).

5. Procédé selon l'une des revendications 1 à 3, **caractérisé par le fait que** les données d'authentification (au) et la clé aléatoire (rd) sont transmises au récepteur (CI) de transactions conjointement au cliché (pic).

6. Procédé selon l'une des revendications 1 à 5, **caractérisé par le fait qu'**un chronotimbre, une identification du poste de contrôle (TE), une identification de l'élément de traitement (AE), et/ou une valeur de comptage permanente, sont intégrés dans les données d'authentification (au).

7. Procédé selon l'une des revendications 1 à 6, **caractérisé par le fait que** plusieurs clés cryptographiques (tkᵢ), à identifications associées (tkID), sont mémorisées dans le récepteur (CI) de transactions et dans l'élément de traitement (AE), l' identification (tkID) de la clé employée (tkᵢ) étant intégrée dans les données d'authentification (au) et étant utilisée, dans ledit récepteur (CI) de transactions, en vue de déterminer la clé (tkᵢ) associée.

8. Procédé selon l'une des revendications 1 à 7, **caractérisé par le fait qu'**un élément de matériel, utilisé en tant qu'élément de traitement (AE) précité, est raccordé au poste de contrôle (TE) par l'intermédiaire d'un interface physique (25).

9. Procédé selon la revendication 8, **caractérisé par le fait que** la dissociation de l'interface (25) rend l'élément de matériel (AE) inutilisable.
